# EUROPEAN PATENT APPLICATION

(11) **EP 4 629 301 A1**
(43) Date of publication of application: **08.10.2025**
(21) Application number: 25161405.3
(22) Date of filing: 03.03.2025
(51) Int. Cl.: H01M 4/04, B05B 9/04, C09D 11/00, B05C 1/00, B05B 13/02, B05D 1/26, C09D 11/106, C09D 11/107, C09D 11/322, C09D 11/324, C09D 11/52, B05C 5/02, B05C 11/10, H01M 4/1391, H01M 4/1393

(54) **LIQUID COMPOSITION, LIQUID DISCHARGER, AND LIQUID DISCHARGE METHOD**

(30) Priority: 13.03.2024 JP 2024038689; 20.11.2024 JP 2024202411
(71) Applicant: Ricoh Company, Ltd., Tokyo 143-8555 (JP)
(72) Inventor: Shirakura, Toshiya, Tokyo 143-8555 (JP); Ohya, Kayato, Tokyo 143-8555 (JP); Utsuki, Aya, Tokyo 143-8555 (JP); Ichinose, Masako, Tokyo 143-8555 (JP); Sagisaka, Toshiya, Tokyo 143-8555 (JP)
(74) Representative: Marks & Clerk LLP

(57) **Abstract**

A liquid composition (37) includes an active material and a dispersion medium. ηA is a viscosity of the liquid composition at a shear rate of 10-1s-1 and the ηA is equal to or greater than 1000 mPa·s. ηB is a viscosity of the liquid composition at a shear rate of 105s-1and the ηB is equal to or smaller than 100 mPa·s.

## Description

### BACKGROUND

### Technical Field

Embodiments of the present disclosure relate to a liquid composition, a liquid discharger, and a liquid discharge method.

### Related Art

Currently, the usage range of electrochemical elements such as lithium ion secondary batteries, electric double layer capacitors, lithium ion capacitors, and redox capacitors has been rapidly expanding from small consumer devices such as wearable devices and smartphones to large devices such as electric vehicles and stationary storage batteries.

The electrode includes an electrode mixture layer which includes an active material layer and contributes to battery characteristics such as capacity and electromotive force. The liquid composition that is employed for forming the electrode mixture layer typically contains an active material and a dispersion medium. Such a liquid composition is known as a constituent element of an electrode constituting the lithium ion secondary battery. Examples of the method for producing the electrode include, for example, a contact production method represented by, for example, a die coating method, a gravure coating method, a dip coating method, a screen printing method, and a non-contact production method in which a liquid composition for an electrode mixture layer is applied onto an electrode base for forming the electrode mixture layer on the electrode base, as represented by, for example, a jet dispenser method, an inkjet method, a spray coating method. Currently, from the viewpoint of reducing material loss, the non-contact production method, in particular, the inkjet method, which can apply a coating liquid onto a base in a free shape, is expected as the electrode production method.

Many physical properties of liquid compositions suitable for the above-described various production methods have been disclosed. For example, Japanese Unexamined Patent Application Publication No. 2017-182962 discloses a slurry composition that contains carbon black having a crystallinity of equal to or greater than 60% as a conductive material is excellent in viscosity characteristics and coatability. WO2022-0808280 discloses an electrode production method that employs a composition having a viscosity ratio between a high shear rate and a low shear rate in a specific range, to obtain an application liquid as a battery separator, which is excellent in coatability and can form a coating film excellent in surface smoothness. Further, Japanese Unexamined Patent Application Publication No. 2011-113838 discloses an electrode production method that employs a battery electrode paste having first to third shear viscosities at first to third shear rates, respectively, in specific ranges has excellent coatability.

Japanese Unexamined Patent Application Publication No. 2017-182962 discloses liquid discharge methods such as the doctor blade coating method, the roll coating method, the slot-die coating method, but does not disclose a liquid discharge method employed for an image forming apparatus or a liquid discharger. WO2022-0808280 and Japanese Unexamined Patent Application Publication No. 2011-113838 do not disclose a liquid discharge method employed for an image forming apparatus or a liquid discharger. When liquid compositions that are disclosed in Japanese Unexamined Patent Application Publication Nos. 2017-182962, 2011-113838, and WO2022-0808280, are employed in an image forming apparatus to form an image, unintentional scattering of the liquid compositions around the image was observed by the inventors of the present disclosure. When a liquid composition for forming an electrode mixture layer is applied onto a base to form an electrode, scattering of the liquid composition may cause the short circuit of a battery.

### SUMMARY

In light of the above-described problems, a purpose of the present disclosure is to provide a liquid composition, a liquid discharger, and a liquid discharge method.

To solve the above problems, the liquid composition includes an active material; and a dispersion medium. ηA is a viscosity of the liquid composition at a shear rate of 10-1s-1 and the ηA is equal to or greater than 1000 mPa·s. ηB is a viscosity of the liquid composition at a shear rate of 105s-1and the ηB is equal to or smaller than 100 mPa·s. The liquid discharger includes a storage container to store the liquid composition and a discharge device including a liquid discharge head to discharge the liquid composition onto a base. The liquid discharge method includes discharging the liquid composition from a liquid discharge head onto a base while forming a liquid column between the liquid discharge head and the base.

According to embodiments of the present disclosure, the liquid composition can be provided that can reduce a scattering phenomenon of mist in which the liquid composition may separate and fly as mist, rebounding of the liquid composition, and liquid separation of the liquid composition, which is typically observed when a liquid discharger discharges the liquid composition.

### BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:
FIGS. 1A and 1B are diagrams each illustrating a condition in which a liquid composition unintentionally scatters which may occur when the liquid composition is discharged from a liquid discharger onto a base;
FIG. 2 is a diagram illustrating a liquid discharger including liquid discharge heads when the liquid discharger continuously applies a liquid composition onto a base from the liquid discharge heads;
FIG. 3 is a diagram illustrating a liquid discharger including liquid discharge heads when the liquid discharger discontinuously applies a liquid composition onto a base from the liquid discharge heads;
FIG. 4 is a schematic diagram illustrating a configuration of a liquid discharger;
FIG. 5 is a schematic diagram illustrating a configuration of another liquid discharger;
FIG. 6 is a schematic diagram illustrating a configuration of still another liquid discharger;
FIG. 7 is a schematic diagram illustrating an electrode manufacturing apparatus using a liquid discharger; and
FIG. 8 is a schematic diagram illustrating another electrode manufacturing apparatus using a liquid discharger.

The accompanying drawings are intended to depict embodiments of the present invention and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

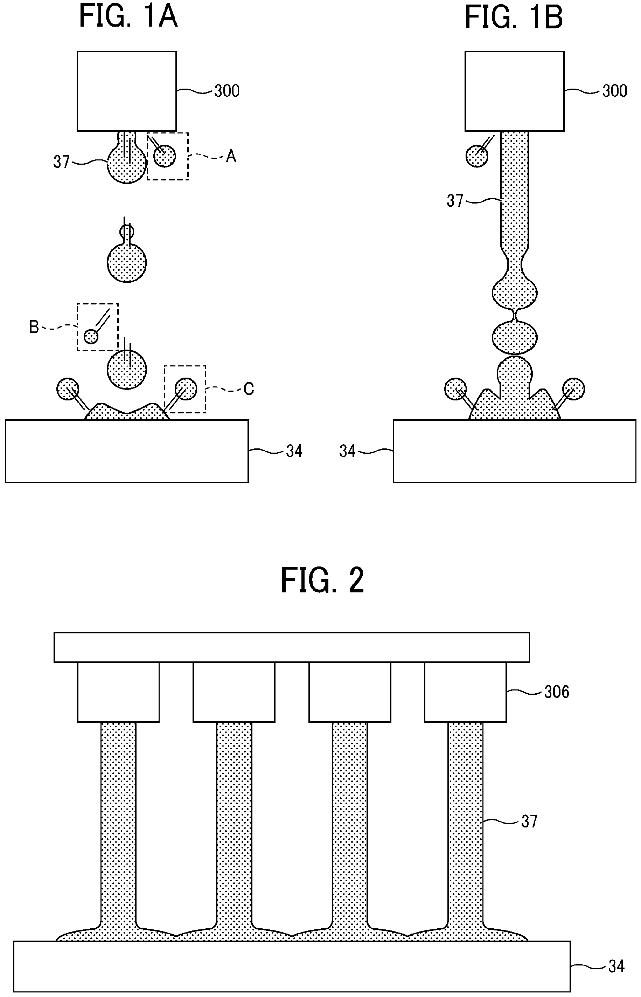

FIGS. 1A and 1B are diagrams each illustrating a condition in which a liquid composition 37 unintentionally scatters which may occur when a liquid discharger 300 discharges the liquid composition onto a base. When the liquid discharger 300 discharges the liquid composition 37 for the purpose of image formation, a scattering phenomenon of mist in which the liquid composition 37 may separate and fly as mist in unintended directions as illustrated in an area A enclosed by a dotted line in FIG. 1A, which is typically observed immediately after a liquid composition is discharged. As illustrated in an area B enclosed by a dotted line in FIG. 1A, a scattering phenomenon of liquid separation may occur in which the liquid composition 37 that is discharged intermittently or continuously separates and flies in unintended directions while the liquid composition 37 flies until the liquid composition 37 lands on a base 34. Further, as illustrated in an area C enclosed by a dotted line in FIG. 1A, due to an impact when the liquid composition 37 lands on the base 34, a scattering phenomenon of rebounding in which the liquid composition 37 rebounds in an unintended direction, may occur. The above-described scattering phenomena of mist, liquid separation, and rebounding are collectively referred to simply as "liquid scattering" in the following description. When the liquid scattering occurs, not only the appearance of the image formed on the base 34 using the liquid composition 37 is impaired but also surroundings of the image are contaminated. For this reason, a fatal defect related to safety such as a short circuit may occur in a subsequent processing, such as a processing step, and a lamination step.

Embodiments of the present disclosure are based on a finding through intensive studies by the inventors that the liquid scattering that is caused when a liquid composition is discharged from a liquid discharger can be prevented by setting the shear viscosity characteristics of the liquid composition to an appropriate numerical range.

A description is given below in detail of a liquid composition, a liquid discharger, and a liquid discharge method.

### Liquid Composition

The liquid composition 37 contains an active material and a dispersion medium, and may further contain other components as needed.

### Active Material

The active material is not particularly limited as long as the effect of embodiments of the present disclosure can be obtained, and for example, a cathode active material or an anode active material can be employed. One type of cathode active material or anode active material may be used alone, or two or more types thereof may be used in combination.

### Cathode Active Material

The cathode active material is not particularly limited as long as it is a material capable of reversibly occluding and releasing alkali metal ions, and an alkali-metal-containing transition metal compound can be employed.

Examples of the alkali-metal-containing transition metal compounds include, but are not limited to, lithium-containing transition metal compounds such as a composite oxide comprising lithium and one or more elements selected from the group consisting of cobalt, manganese, nickel, chromium, iron, and vanadium.

Examples of the lithium-containing transition metal compounds include, but are not limited to, lithium cobalt oxide, lithium nickel oxide, and lithium manganese oxide.

Examples of the alkali-metal-containing transition metal compounds include polyanionic compounds having a tetrahedron represented by XO₄ (X represents P, S, As, Mo, W, Si, etc.) in the crystal structure. Among these, lithium-containing transition metal phosphate compounds such as lithium iron phosphate and lithium vanadium phosphate are preferable from the viewpoint of cycle characteristics, and lithium vanadium phosphate are preferable from the viewpoint of lithium diffusion coefficient and output characteristics.

When the polyanion compound is employed as the alkali-metal-containing transition metal compound, preferably, the polyanionic compounds are surface-coated with a conductive auxiliary agent such as a carbon material for electron conductivity.

When the alkali-metal-containing transition metal compound is employed, at least a part of the surface thereof is preferably coated with an ion-conductive oxide. As the ion conductive oxide, a lithium ion conductive oxide is preferable.

The lithium-ion-conductive oxide is not particularly limited and may be appropriately selected depending on the intended purpose. Examples of the lithium-ion-conductive oxides include oxides represented by a general formula LiₓAO_{y} (A is B, C, Al, Si, P, S, Ti, Zr, Nb, Mo, Ta, Sc, V, Y, Ca, Sr, Ba, Hf, Ta, Cr, or W, and x and y are positive numbers).

Specific examples of the lithium-ion-conductive oxides include Li₃BO₃, LiBO₂, Li₂CO₃, LiAlO₂, Li₄SiO₄, Li₂SiO₃, Li₃PO₄, Li₂SO₄, Li₂TiO₃, Li₄Ti₅O₁₂, Li₂Ti₂O₅, Li₂ZrO₃, LiNbO₃, LiTaO₃, Li₂MoO₄, and Li₂WO₄. Among these, Li₄Ti₅O₁₂, Li₂ZrO₃, or LiNbO₃ is preferable.

The lithium-ion-conductive oxide may be a composite oxide. Any combination of lithium-ion-conductive oxides can be adopted as the composite oxide. Examples of the composite oxides include Li₄SiO₄ - Li₃BO₃, and Li₄SiO₄ - Li₃PO₄.

### Anode Active Material

The anode active material is not particularly limited and may be appropriately selected depending on the intended purpose, as long as it is a material capable of reversibly occluding and releasing alkali metal ions. For example, a carbon material containing graphite having a graphite crystal structure may be employed.

Examples of the carbon materials include, but are not limited to, natural graphite, spherical or fibrous synthetic graphite, poorly-graphitizable carbon (hard carbon), and easily-graphitizable carbon (soft carbon).

Examples of materials other than the carbon materials include lithium titanate and titanium oxide.

For improving energy density of lithium ion batteries, high capacity materials such as silicon, silicon alloy, silicon oxide, and silicon nitride can also be used as the anode active material.

The median diameter, which may also be referred to simply as D50 in the following description, of the active material is preferably equal to or greater than 0.5 µm and equal to or smaller than 20 µm. More preferably, the median diameter of the active material is equal to or greater than 3 µm and equal to or smaller than 10 µm. When the median diameter of the active material is 0.5 µm or greater and 20 µm or smaller, the weight concentration of the active material in the liquid composition can be increased. Accordingly, an electrode mixture layer having a homogeneous composition can be obtained in a subsequent drying step. When the median diameter of the active material is 3 µm or greater and 10 µm or smaller, an electrode having more favorable electrical characteristics can be obtained. A diameter that is a maximum value of a distribution in the measured particle size distribution of the active material in the liquid composition for forming an electrode mixture layer was calculated as a median diameter.

Examples of the method for measuring the median diameter of the active material are not particularly limited and may be appropriately selected depending on the intended purpose. For example, the median diameter can be measured in accordance with ISO 13320:2009. The apparatuses that are employed for the measurement of the median diameter are not particularly limited and may be appropriately selected depending on the intended purpose. Examples of the apparatuses include a laser diffraction particle size distribution analyzer (Mastersizer 3000, manufactured by Malvern Instruments Ltd.).

A maximum particle diameter Dmax of the active material is preferably 40 µm or smaller, more preferably 30 µm or smaller, and still more preferably 20 µm or smaller. When the maximum particle diameter Dmax of the active material is equal to or smaller than 40 µm, turbulent flow in droplets or liquid column of the liquid composition discharged by the liquid discharger is reduced. Accordingly, mist is less likely to be generated even when the distance between the discharge device and the base at which the liquid composition lands is long.

The method by which the maximum particle diameter Dmax of the active material is measured is not particularly limited and may be appropriately selected depending on the intended purpose. For example, the maximum particle diameter Dmax can be measured in accordance with ISO 13320:2009. The apparatuses that are employed for the measurement of the median diameter are not particularly limited and may be appropriately selected depending on the intended purpose. Examples of the apparatuses include a laser diffraction particle size distribution analyzer (Mastersizer 3000, manufactured by Malvern Instruments Ltd.).

### Dispersion Medium

The dispersion medium in the present disclosure is a liquid component that disperses the active material in the liquid composition.

The dispersion medium is a component that has a boiling point lower than the decomposition temperature under normal pressure conditions and volatilizes in the drying step. The dispersion medium may be used alone or two or more kinds of the dispersion medium may be used.

Examples of the dispersion medium include, but are not limited to, aqueous dispersion media such as water, ethylene glycol, and propylene glycol; lactam dispersion media such as N-methyl-2-pyrrolidone and 2-pyrrolidone; amide dispersion media such as N-dimethylacetamide; ketone dispersion media such as cyclohexanone; ester dispersion media such as ethyl acetate, butyl acetate, methyl butyrate, ethyl butyrate, butyl butyrate, methyl valerate, ethyl valerate, methyl hexanoate, ethyl hexanoate, methyl heptanoate, ethyl heptanoate, methyl octanoate, ethyl octanoate, ethyl decanoate, ethyl isovalerate, ethyl isobutyrate, butyl isobutyrate, and isobutyl isobutyrate; and aromatic dispersion media such as anisole, mesitylene, and p-cymene. When a cathode active material is contained as the active material, a lactam-based dispersion medium and an amide-based dispersion medium are preferable, and an ester-based dispersion medium, for example, are more preferable, from the viewpoint that the solid content concentration can be increased due to excellent dispersibility, and as a result, drying unevenness due to an appropriate drying step can be prevented.

The boiling point of the dispersion medium is not particularly limited and may be appropriately selected depending on the intended purpose. However, the boiling point of the dispersion medium is preferably 100°C or higher from the viewpoint of storage stability, more preferably 120°C or higher from the viewpoint of preventing the liquid composition from drying after the liquid composition is discharged until landing on a base. Still more preferably, the boiling point of the dispersion medium is 150°C or higher from the viewpoint of preventing a discharge device of the liquid discharger from drying. The drying temperature is preferably 300°C or lower from the viewpoint of quickly drying the liquid composition in the drying step, more preferably 250°C or lower from the viewpoint of achieving uniformity of the film thickness of the coating film obtained in the drying step.

Still more preferably, the drying temperature is 200°C or lower from the viewpoint of the uniformity of the composition of the coating film obtained in the drying step.

### Other Components

Other components are not particularly limited and may be appropriately selected depending on the intended purpose. Examples of the other components include a conductive auxiliary agent, a solid electrolyte, a dispersant, a surfactant, a pH adjuster, a rust inhibitor, an antiseptic, a fungicide, an antioxidant, an anti-reducing agent, an evaporation accelerator, a chelating agent, and a thickener.

### Binder

Binders are not particularly limited and may be appropriately selected depending on the intended purpose, as long as the binder can bind nonvolatile components such as the active material to each other.

As the binder, a polymer compound can be employed. Examples of the polymer compound include thermoplastic resins such as polyvinylidene fluoride (PVDF), acrylic resins, polyethylene, polypropylene, polyurethane, nylon, polytetrafluoroethylene, polyphenylene sulfide, polyethylene terephthalate, and polybutylene terephthalate; polyamide compounds; polyimide compounds; polyamide-imides; ethylene-propylene-butadiene rubber (EPBR), styrene-butadiene rubber (SBR), nitrile-butadiene rubber (NBR), isoprene rubber, polyisobutene, polyethylene glycol (PEO) polymethyl methacrylate (PMMA), polyethyl methacrylate (PEMA), polybutyl methacrylate (PBMA), polyethylene vinyl acetate (PEVA), 2 - (dimethylamino) ethyl polymethacrylate, 2 - (diethylamino) ethyl polymethacrylate, 2 - (dimethylamino) ethyl-polybutyl methacrylate copolymer, 2 - (diethylamino) ethyl-polybutyl methacrylate copolymer, and carboxymethyl cellulose.

The content of the binder relative to the active material is not particularly limited and may be appropriately set depending on the intended purpose. However, the content of the binder relative to the active material is preferably 0.5% by mass or greater from the viewpoint of improving the binding property of the electrode mixture layer obtained in the drying step of the liquid composition, more preferably 1% by mass or greater from the viewpoint of preventing the liquid composition from being damaged during transportation, and still more preferably 1.5% by mass or greater from the viewpoint of preventing the liquid composition from being damaged during processing. **In** addition, the content of the binder relative to the active material is preferably 15% by mass or smaller from the viewpoint of preventing inhibition of ion conduction, more preferably 10% by mass or smaller from the viewpoint of preventing inhibition of electron conduction in the electrode mixture layer, and still more preferably 5% by mass or smaller from the viewpoint of improving energy density.

### Conductive Auxiliary Agent

Examples of the conductive auxiliary agent include, but are not limited to, and may be appropriately selected depending on the intended purpose, conductive carbon black produced by a furnace method, an acetylene method, or a gasification method, and carbon materials such as carbon nanofiber, carbon nanotube, graphene, and graphite particles.

Examples of the conductive auxiliary agent other than carbon materials include, but are not limited to, particles and fibers of metals such as aluminum. The conductive auxiliary agent may be combined with the active material in advance.

The content of the conductive additive relative to the active material is not particularly limited and may be appropriately set depending on the intended purpose. However, the content of the conductive additive relative to the active material is preferably 0.01% by mass or greater from the viewpoint of improving the electron conductivity in the electrode mixture layer. In addition, the content of the conductive additive relative to the active material is preferably equal to or smaller than 10% by mass from the viewpoint of preventing inhibition of ion conduction in the electrode mixture layer, more preferably equal to or smaller than 5% by mass from the viewpoint of preventing damage during transportation and processing, and still more preferably equal to or smaller than 3% by mass from the viewpoint of improving energy density.

### Solid Electrolyte

The solid electrolyte is not particularly limited and may be appropriately selected depending on the intended purpose, as long as the solid electrolyte has electron insulating properties, exhibits ion conductivity, and does not react with the organic dispersion medium. Examples of the solid electrolyte include an oxide-based solid electrolyte and a sulfide-based solid electrolyte.

Among these, sulfide solid electrolytes are preferable in that they have high plasticity and can form a favorable interface between solid electrolyte particles or between the solid electrolyte and the active material, and crystalline argyrodite type sulfide solid electrolytes are more preferable in that they have particularly favorable compatibility with the dispersibility of the liquid composition of the present disclosure and can obtain an excellent dispersion effect similar to that of the active material.

Examples of the oxide-based solid electrolytes include compounds containing an oxygen atom (O), having ion conductivity of a metal belonging to Group 1 or 2 of the periodic table, and having electron insulating properties.

The expression having electron insulating properties means that the positive electrode and the negative electrode are not short-circuited when they are opposed to each other with the solid electrolyte layer interposed therebetween, and the expression exhibiting ion conductivity means that only ions move when a potential difference is applied between the positive electrode and the negative electrode opposed to each other with the solid electrolyte layer interposed therebetween.

Specific examples of the oxide-based solid electrolyte compounds include, but are not limited to, LiₓₐLa_{ya}TiO₃ [xa = 0.3 to 0.7, ya = 0.3 to 0.7] (LLT), Li_{xb}La_{yb}Zr_{zb}Mbb_{mb}O_{nb} (Mbb is at least one element of Al, S, Al, Si, Ga, Ge, In, and Sn, xb satisfies 5 ≤ xb ≤ 10, yb satisfies 1 ≤ yb ≤ 4, zb satisfies 1 ≤ zb ≤ 4, mb satisfies 0 ≤ mb ≤ 2, and nb satisfies 5 ≤ nb ≤ 20), Li_{xc}B_{yc}Mcc_{zc}O_{nc} (Mcc is at least one element of C, S, Al, Si, Ga, Ge, In, and Sn, xc satisfies 0 ≤ xc ≤ 5, yc satisfies 0 ≤ yc ≤ 1, zc satisfies 0 ≤ zc ≤ 1, and nc satisfies 0 ≤ nc ≤ 6), Li_{xd} (Al, Ga) _{yd} (Ti, Ge) _{zd}Si_{ad}P_{md}O_{nd} (1 ≤ xd ≤ 3, 0 ≤ yd ≤ 1, 0 ≤ zd ≤ 2, 0 ≤ ad ≤ 1, 1 ≤ md ≤ 7, 3 ≤ nd ≤ 13), and Li (3-Mde) MeeₓₑDeeO (xe represents a number of 0 to 0.1, and Mee represents a divalent metal atom, Dee represents a halogen atom or a combination of two or more types of halogen atoms), Li_{xf}Si_{yf}O_{zf} (1 ≤ xf ≤ 5, 0 <yf ≤ 3, 1 ≤ zf ≤ 10), Li_{xg}S_{yg}O_{zg} (1 ≤ xg ≤ 3, 0 <yg ≤ 2, 1 ≤ zg ≤ 10), Li₃BO₃ - Li₂SO₄, Li₂O - B₂O₃ - P₂O₅, Li₂O - SiO₂, Li₆BaLa₂Ta₂O₁₂, Li₃PO (4 - 3/2w) N_{w} (w < 1), Li_{3.5}Zn_{0.25}GEO₄ having LISICON (lithium super ionic conductor) type crystal structure, La_{0.55}Li_{0.35}TiO₃ having perovskite-type crystal structure,

LiTi₂P₃O₁₂ having NASICON (Natrium super ionic conductor) type crystal structure, Li_{1+xh+yh} (Al, Ga) ₓₕ (Ti, Ge) ₂₋ₓₕSi_{yh}P_{3-yh}O₁₂ (where 0 ≤ xh ≤ 1 and 0 ≤ yh ≤ 1), and Li₇La₃Zr₂O₁₂ (LLZ) having a garnet crystal structure.

Phosphorus compounds containing Li, P and O are also desirable. Examples of the material include lithium phosphate (Li₃PO₄), LiPON in which part of oxygens of lithium phosphate is substituted with nitrogens, and LiPOD1 (D1 is at least one selected from Ti, V, Cr, Mn, Fe, Co, Ni, Cu, Zr, Nb, Mo, Ru, Ag, Ta, W, Pt, Au).

Further, LiA¹ON (A¹ is at least one selected from Si, B, Ge, Al, C, Ga) can also be preferably employed.

The sulfide solid electrolytes can be roughly classified into, for example, crystalline sulfide solid electrolytes and glass-based solid electrolytes.

Examples of the crystalline sulfide solid electrolytes include, but are not limited to, Li_{9.54}Si_{1.74}P_{1.44}S_{11.7}Cl_{0.3}, Li_{9.6}P₃S₁₂, Li₉P₃S₉O₃, Li_{9.81}Sn_{0.81}P_{2.19}S₁₂, Li_{9.42}Si_{1.02}P_{2.1}S_{9.96}O_{2.04}, Li₁₀Ge (P₁ - ₓSbₓ) ₂S₁₂ (0 ≤ x ≤ 0.15), Li₁₀SnP₂S₁₂, Li_{10.35} [M1₁ - ₓM2ₓ]_{1.35}P_{1.65}S₁₂ (M1, M2= Any of Si, Ge, Sn, As, Sheet bundle, 0 ≤ x ≤ 0.15), Li₁₁Si₂PS₁₂, Li₁₁AlP₂S₁₂, Li_{3.45}Si_{0. 45}P_{0.55}S₄, Li₆PS₅X (X = CI, Br, I), Li₅PS₄X₂ (X = CI, Br, I), Li_{5.5}PS_{4.5}Cl_{1.5}, Li_{5.35}Ca_{0.1}PS_{4.5}Cl_{1.55}, Li₆ + ₓMₓSb_{1 -x}S₅I (M = Si, Ge, Sn, 0 ≤ x ≤ 1), Li₇P₂S₈I, γ - Li₃PS₄, Li₄MS4 (M = Ge, Sn, As), Li₄ - ₓSn₁ - ₓSbxS₄ (0 ≤ x ≤ 0.15), Li₄ - ₓGe₁ - ₓPxS₄ (0 ≤ x ≤ 0.15), Li₃ + ₅ₓP_{1 - x}S₄ (0 ≤ x ≤ 0.3)

Examples of the glass-based sulfide solid electrolytes include Li₂S - P₂S₅, Li₂S - P₂S₅ - LiI, Li₂S - P₂S₅ - P₂O₅, Li₂S - P₂S₅ - LiCl, Li₂S - SiS₂, Li₂S - SiS₂ - P₂S₅, Li₂S - SiS₂ - Al₂S₃, Li₂S - SiS₂ = LiₓMO_{y} (M = Si, P, Ge) Li₇P₃S₁₁ glass ceramics obtained by crystallizing a part of glass-based sulfide solid electrolytes can also be employed. In the present embodiment, the mixing ratio of the raw materials of the glass-based sulfide solid electrolyte is not limited.

The content of the conductive additive with respect to the active material is not particularly limited and may be appropriately set depending on the intended purpose. However, the content of the conductive additive with respect to the active material is preferably equal to or greater than 10% by mass from the viewpoint of improving the ion conductivity in the electrode mixture layer, and more preferably equal to or greater than 15% by mass from the viewpoint of improving the processability. In addition, the content of the conductive additive is preferably equal to or smaller than 40% by mass from the viewpoint of preventing the inhibition of electron conduction in the electrode mixture layer, and more preferably equal to or smaller than 30% by mass from the viewpoint of improving processability.

### Dispersant

The dispersants are not particularly limited as long as they can enhance the dispersibility of the active material in the liquid composition, and known or commercially available dispersants can be appropriately employed without particular limitation. Examples of the dispersants include polymer dispersants such as carboxymethyl cellulose, polyethylene, polyethylene oxide, polypropylene oxide, polycarboxylic acid, naphthalenesulfonic acid-formalin condensate, polyethylene glycol, polycarboxylic acid partial alkyl ester, polyether, and polyalkylene polyamine; low molecular weight dispersants such as alkylsulfonic acid, quaternary ammonium, higher alcohol alkylene oxide, polyhydric alcohol ester, and alkylpolyamine; and inorganic dispersants such as polyphosphate dispersants.

### Shear Viscosity of Liquid Composition

The liquid composition of embodiments of the present disclosure has a low shear viscosity η^{A} at a shear rate of 10⁻¹s⁻¹ and a high shear viscosity η^{B} at a shear rate of 10⁵s⁻¹, when η^{A} is equal to or greater than 1000 mPa·s and η^{B} is equal to or smaller than 100 mPa·s.

A liquid composition exhibiting the viscosity relation between η^{A} and η^{B} is typically called a thixotropic fluid. When the liquid composition is discharged from the liquid discharger, the liquid composition is pushed out from the liquid discharger by an external force as described below. At this time, a shear rate is applied to the liquid composition. When η^{B} is equal to or smaller than 100 mPa·s, the liquid composition is discharged immediately after the external force is applied. Accordingly, mist can be prevented from being generated. In addition, the liquid composition of the present disclosure having thixotropy is thickened in association with the attenuation of the shear rate during a period in which the liquid composition discharged from the liquid discharger flies and lands on the base. When η^{A} is equal to or greater than 1000 mPa·s, it is possible to reduce the liquid scattering in which the liquid composition 37 separates while flying due to the air resistance between the base and the liquid discharge device. In addition, when η^{A} is equal to or greater than 1000 mPa·s, the liquid composition has a sufficiently high viscosity, in other words, a viscous resistance, with respect to a collision energy when the liquid composition lands on the base. Accordingly, rebounding of the liquid composition can be reduced.

η^{A} is preferably equal to or greater than 5000 mPa·s from the viewpoint that the liquid composition is unlikely to be affected by the air flow between the base and the liquid discharger, in addition from the viewpoint that trailing of the liquid composition at the time at which the liquid composition is discharged, which is one factor of liquid separation, can be prevented. Further, η^{A} is preferably equal to or smaller than 20000 mPa·s, particularly preferably equal to or smaller than 13000 mPa·s, from the viewpoint of improving the film thickness uniformity after the liquid composition lands on the base.

η^{B} is preferably 20 mPa·s or greater from the viewpoint of preventing the liquid composition from drying unevenly due to heat convention in the drying step.

A method for measuring the shear viscosity of the liquid composition is not particularly limited and may be appropriately selected depending on the intended purpose. For example, the shear viscosity of the liquid composition can be measured in conformity with JIS Z 8803. The apparatus that is employed for measuring the shear viscosity of the liquid composition is not particularly limited and may be appropriately selected depending on the intended purpose. For example, a rheometer MCR302e, MCR702e space (manufactured by Anton Paar Japan K.K.) can be employed for the measurement.

The η^{A} and η^{B} of the liquid composition of the present disclosure are measured by following steps because favorable reproducibility can be obtained. First, the viscosity of the liquid composition is measured for 1 minute at a shear rate of 0.1s⁻¹. Subsequently, the viscosity is measured while changing the shear rate from 0.1s⁻¹ to 100000s⁻¹. This is repeated twice in succession, and the viscosity at the second time 0.1s⁻¹ is denoted by η^{A}, and the viscosity at 10000s⁻¹ is denoted by η^{B}. When the viscosity of the liquid composition at a shear rate of 0.1 to 10000s⁻¹ cannot be continuously measured due to, for example, the restriction of the measuring apparatus, the viscosity of the liquid composition is measured such that the shear rates are overlapped by at least equal to or greater than one digit when the measurement is performed one after another. For example, when MCR302e (manufactured by Anton Paar Japan K.K.) is employed, the viscosity at 0.1 to 1000s⁻¹ is measured using a cone plate (CP-50, manufactured by Anton Paar Japan K.K.), and the viscosity at 100 to 100000s⁻¹ is measured using a parallel plate (PP-50, manufactured by Anton Paar Japan K.K.).

### Dynamic Viscoelasticity of Liquid Composition

As an index of dynamic viscoelasticity, loss tangent tan δ defined as a ratio of loss modulus to storage modulus is typically employed. From the viewpoint of further reducing the risk of mist generation, preferably that the viscosity of the liquid composition is dominant at a timing at which an external force from the discharger is applied to the liquid composition for discharge of the liquid composition and a distortion is applied to the liquid composition. In this respect, when a shear force of 2 Hz is applied to the liquid composition, tan δ 1 at a distortion rate of 100% is preferably equal to or greater than 1, and tan δ 2 at a distortion rate of 10% is more preferably equal to or greater than 1. In addition, from the viewpoint of further reducing the risk of rebounding at the time of landing, preferably that the tan δ 3 at the time of a distortion rate of 1% is equal to or smaller than 1 in that elasticity is preferably dominant when the liquid composition lands at the base.

A method for measuring the shear viscosity of the liquid composition is not particularly limited and may be appropriately selected depending on the intended purpose. The apparatus that is employed for measuring the shear viscosity of the liquid composition is not particularly limited and may be appropriately selected depending on the intended purpose. For example, a rheometer MCR302e, MCR702e space (manufactured by Anton Paar Japan K.K.) can be employed for the measurement.

The tan δ 1, the tan δ 2, and the tan δ 3 of the liquid composition of the present disclosure are measured by steps described below to obtain favorable reproducibility. First, the dynamic viscoelasticity is measured at 2 Hz and a distortion rate of 0.1% for 1 minute. Subsequently, the dynamic viscoelasticity is measured while changing the distortion rate from 0.01% to 1000%. This is repeated twice in succession, and the loss tangent at the second distortion rate of 100% is the tan δ1, the loss tangent at the distortion rate of 10% is the tan δ2, and the loss tangent at the distortion rate of 1% is the tan δ3. For example, when MCR302e (manufactured by Anton Paar Japan K.K.) is employed, the dynamic viscoelasticity at a distortion rate of 0.1 to 1000% at a 2 Hz of frequencies is measured using a cone plate (CP-50, manufactured by Anton Paar Japan K.K.). When the viscosity of the liquid composition at a distortion rate of 0.01 to 1000% cannot be continuously measured due to, for example, the restriction of the measuring apparatus, the viscosity of the liquid composition is measured such that the distortion rates are overlapped by at least equal to or greater than one digit when the measurement is performed one after another.

The shear viscosity and the dynamic viscoelasticity of the liquid composition can be easily adjusted by the solid content concentration contained in the liquid composition, the kind of the dispersion medium, and the blending ratio of other components such as a conductive auxiliary agent, a dispersant, and a binder.

### Solid Content Concentration

The solid content concentration of the liquid composition is a mass percentage of the solid content with respect to the total mass of the liquid composition. The solid content is active material and other components that are not removed by a drying process, and examples of the solid content include a conductive additive, a binder, a solid electrolyte, and a dispersant. The solid content concentration of the liquid composition is not particularly limited and may be appropriately selected depending on the intended purpose.

The solid content is preferably equal to or greater than 40% by mass from the viewpoint of preventing the unevenness of the film thickness due to heat convection during the drying process or an increase in the time necessary to dry the liquid composition. The solid content is more preferably equal to or greater than 60% by mass from the viewpoint of preventing the unevenness of the composition of the liquid composition in a direction of the film thickness due to the heat convection during the drying process. The upper limit of the solid content concentration is not particularly limited and may be appropriately selected depending on the intended purpose. However, the upper limit of the solid content concentration is preferably equal to or smaller than 80% by mass from the viewpoint of preventing the liquid composition from drying in the discharge device of the liquid discharger.

The method for measuring the solid concentration of the liquid composition is not particularly limited and may be appropriately selected depending on the intended purpose. Examples of the methods for measuring the solid concentration of the liquid composition include employing a formula below when the composition of the liquid composition is known, and employing a method in accordance with Japanese Industrial Standards (JIS) K5601 1-2 when the composition of the liquid composition is unknown. Solid content concentration = Total solid content by mass / Total solid content by mass + Dispersion medium by mass × 100 (%)

Examples of apparatuses employed for measuring the solid content concentration are not particularly limited and may be appropriately selected depending on the intended purpose. For example, a heat drying type solid content meter (MX-50, manufactured by A & D Co., Ltd.) may be employed.

### Method for Producing Liquid Composition

The liquid composition can be produced by dissolving or dispersing active materials and, if necessary, other components in a dispersion medium. Specifically, the liquid composition can be prepared by mixing with a dispersion medium using a mixer such as a ball mill, a sand mill, a bead mill, a planetary mixer, a filmix, or an ultrasonic disperser.

### Electrode

The liquid composition of embodiments of the present disclosure is suitable as a material for an electrode. The electrode is obtained by discharging the liquid composition of embodiments of the present disclosure onto a base and drying the liquid composition as needed. The electrode includes a base and an electrode mixture layer, and may include other materials as needed.

### Electrode Mixture Layer

The electrode mixture layer of embodiments of the present disclosure is a coating film containing an active material. The electrode mixture layer is obtained by discharging the liquid composition of embodiments of the present disclosure and other components onto a base as needed, and performing a drying step as needed.

### Substrate

The base that is employed in the electrode is not particularly limited and may be appropriately selected depending on the intended purpose, as long as it has electron conductivity and is stable to an applied potential. Examples of the base include aluminum foil, copper foil, stainless steel foil, titanium foil, etched foil obtained by etching the above-described foils to form fine holes, carbon-coated foil obtained by coating a surface layer with a carbon-containing resin layer, foil coated with a phase-transfer catalyst (PTC) layer, and a perforated base employed in a lithium ion capacitor.

### Liquid Discharge Apparatus

The liquid discharger includes a storage container to store the liquid composition and the discharge device to discharge the liquid composition stored in the storage container. The liquid discharger further includes other units as needed.

The liquid discharger is an apparatus that discharges the liquid composition from the discharge device by an external force described below to form an image. The liquid discharger is not particularly limited as long as the effect of embodiments of the present disclosure can be obtained, and examples of the liquid discharger include an inkjet-type liquid discharger, a spray coating type liquid discharger, and a jet dispenser type liquid discharger. **In** that the liquid composition is discharged from the liquid discharger, the liquid discharger of embodiments of the present disclosure is clearly distinguished from a liquid discharger such as a comma coater or a gravure coater that employes a contact coating method, or a liquid discharger that employs a method of rubbing an extruded liquid composition to coat the liquid composition onto a base, as represented by a die coater.

The external force that is employed for discharging the liquid composition from the liquid discharger is not particularly limited and may be appropriately selected depending on the intended purpose. Examples of the method of generating the external force include a piezoelectric method in which the liquid composition is discharged by a change in volume of a piezoelectric element, a thermal method in which the liquid composition is heated by a heater to generate bubbles in the liquid composition to discharge the liquid composition, and a pressurization method in which pressure is performed to the liquid composition to discharge the liquid composition. Specific examples of the pressurization method include a method of electronically controlling pressure to be applied to the liquid composition to control discharge of the liquid composition as represented by a jet dispenser, and a method of electronically controlling opening and closing of a lid of a discharge device when pressure is applied to liquid composition as represented by a valve-type nozzle to control discharge of the liquid composition.

### Storage Container

The storage container in the liquid discharger of the present disclosure is not particularly limited as long as the storage container can store the liquid composition of the present disclosure. The storage container may be integrated with the liquid discharger or detachable from the liquid discharger. The storage container may be integrated with the liquid discharger or detachable from the liquid discharger.

### Discharge Device

The discharge device of the liquid discharger discharges the liquid composition stored in the storage container. The discharge device includes discharge ports as holes through which the liquid composition is discharged. The shape of the discharge port is not particularly limited as long as the effect of the present disclosure is obtained. The discharge port may be a single discharge port or multiple discharge ports.

The liquid composition of the present disclosure has thixotropy. For this reason, the liquid composition is thickened with time after landing on a base, and the leveling property is impaired. Accordingly, in the process of discharging the liquid composition from the discharge port of the liquid discharger to the base by an external force, from the viewpoint of the film thickness uniformity, a liquid discharger that includes multiple discharge ports is preferable to shorten a time difference when the liquid composition discharged from the multiple discharge ports land within an image area plane to be drawn. **In** general, an inkjet printer that includes discharge ports densely arranged is particularly preferable.

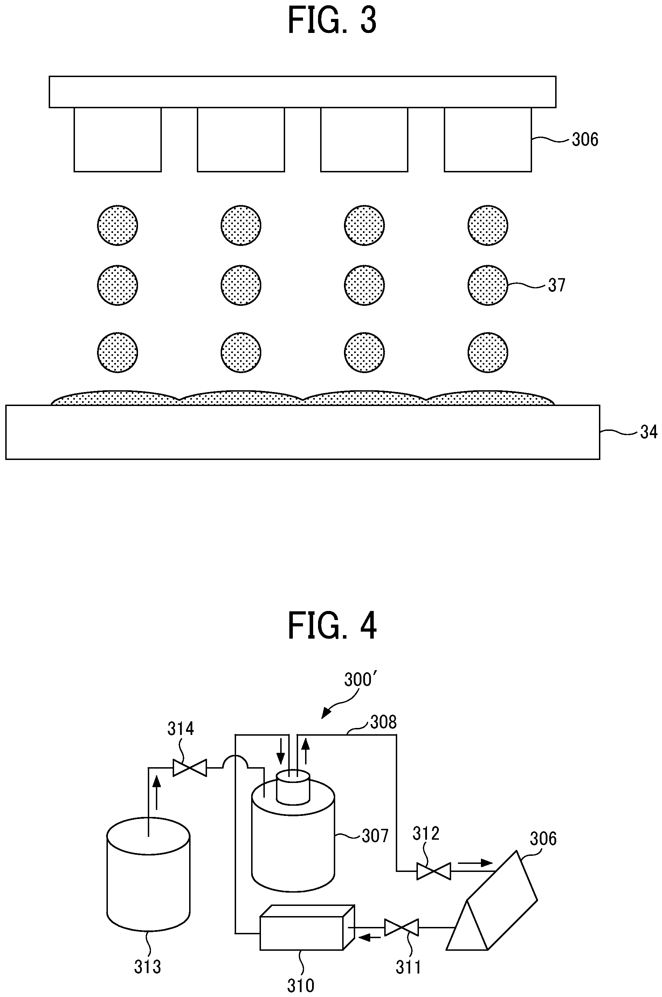

Typically, the discharge pattern of discharging the liquid composition is divided into a pattern in which the external force is continuously applied to the liquid composition to discharge the liquid composition in liquid column shape as illustrated in FIG. 2, and a pattern in which an external force is applied to the liquid composition discretely or in an amplitude manner to discharge the liquid composition in droplet shape as illustrated in FIG. 3. The difference between the time difference at which liquid columns of the liquid composition 37 land within an image area is preferably short from the viewpoint of the film thickness uniformity. As illustrated in FIG. 2, the liquid composition 37 is preferably discharged onto the base while forming the liquid columns between liquid discharge heads 306 and the base 34.

In the liquid discharger of the present disclosure, the distance between the discharge device and the base is not particularly limited as long as the effect of the present disclosure can be obtained. However, the distance is preferably equal to or smaller than 4 mm, and more preferably equal to or smaller than 3 mm, from the viewpoint of reducing the risk of the liquid scattering due to, for example, the airflow. In addition, the distance between the discharge device and the base is preferably equal to or greater than 1 mm because the risk of rebounding of the liquid composition 37 can be reduced by securing a time in which the liquid composition 37 is thickened during the flying period until when the liquid composition 37 lands on the base.

### Configuration Example of Liquid Discharge Apparatus

A description is given below of a configuration example of a liquid discharger in detail with reference to FIGS. 4, 5, and 6.

FIG. 4 is a schematic diagram illustrating a liquid discharger 300' as an example of a liquid discharger according to an embodiment of the disclosure. The liquid discharger 300' includes a tank 307 and an external tank 313 as storage containers, and the liquid discharge head 306 as a discharge device.

The liquid discharger 300' controls a pump 310, a valve 311, and a valve 312. By so doing, the liquid composition can circulate through the liquid discharge head 306, the tank 307, and the tube 308. The liquid discharger 300' includes an external tank 313. The liquid discharger 300' controls the pump 310, the valve 311, the valve 312, and the valve 314 when the liquid composition in the tank 307 decreases. By so doing, the liquid discharger 300' can supply the liquid composition from the external tank 313 to the tank 307.

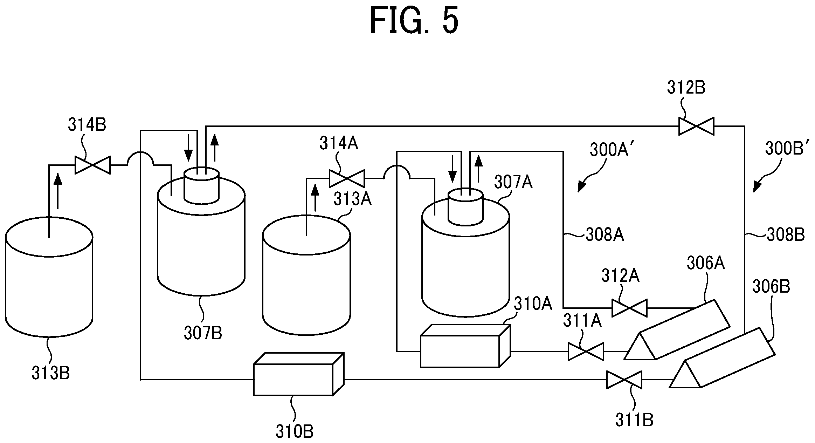

FIG. 5 is a schematic diagram illustrating a liquid discharger 300B' as another example, according to an embodiment of the disclosure.

As illustrated in FIG. 5, the liquid discharger 300A' and liquid discharger 300B' may be employed in combination. In other words, the liquid composition may be supplied from an external tank 307B and an external tank 313A connected to the tank 307A and the tank 313B, respectively, and the liquid discharge head may include multiple heads 306A and heads 306B. When the liquid discharger 300A' and liquid discharger 300B' are employed in combination, the liquid discharger 300A' may include a tube 308A, a valve 311A, a valve 312A, a valve 314A, and a pump 310A, and the liquid discharger 300B' may include a tube 308B, a valve 311B, a valve 312B, a valve 314B, and a pump 310B.

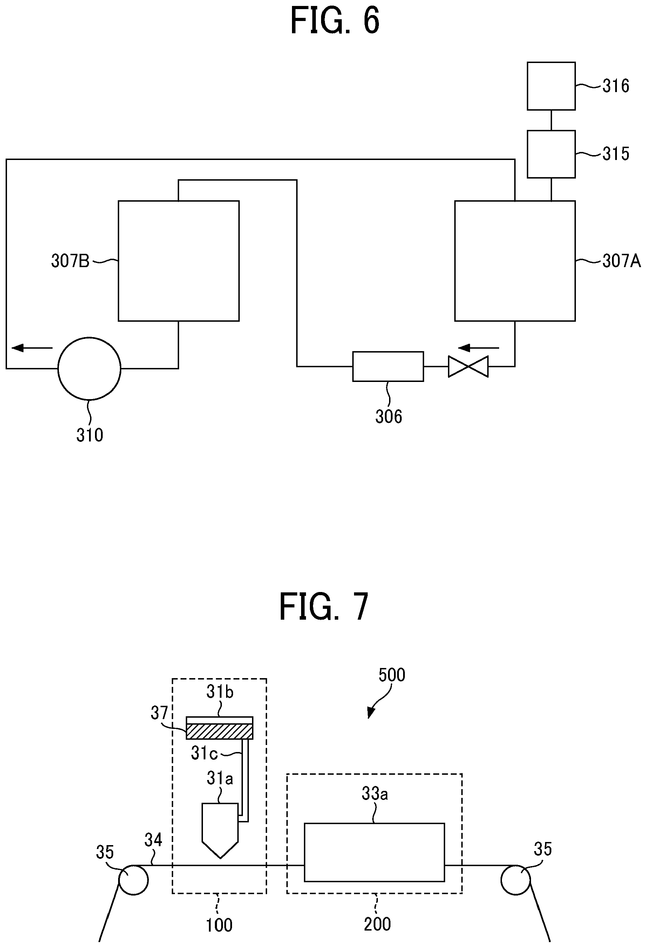

FIG. 6 is a schematic diagram illustrating another liquid discharger according to an embodiment of the disclosure.

In the liquid discharger illustrated in FIG. 6, the liquid composition in the tank 307A is pressurized by pressurized gas generated from a pressurized gas generator 316 via a regulators 315. Then, the liquid composition is supplied to the liquid discharge head 306 by a pressure difference between the tank 307A and the tank 307B. The liquid composition that has not been discharged from the liquid discharge head 306 is fed to the tank 307B and is circulated to the tank 307A via the pump 310.

### Electrode Manufacturing Apparatus

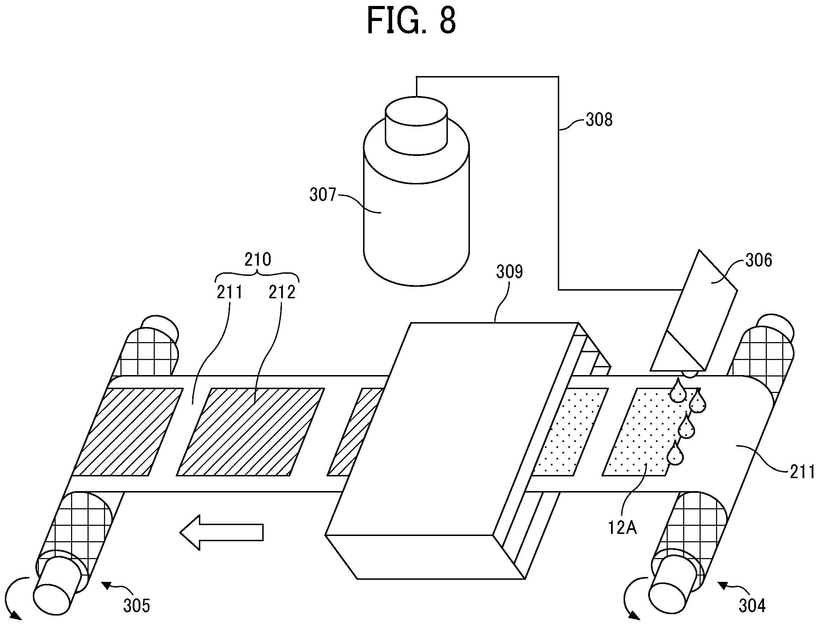

The liquid discharger according to an embodiment of the present disclosure can be suitably employed as an electrode mixture layer forming device in an electrode manufacturing apparatus. In embodiments of the present disclosure, the electrode manufacturing apparatus includes an electrode mixture layer forming device to form an electrode mixture layer, and further includes a heater to heat the electrode mixture layer as needed. A description is given below in detail of an electrode manufacturing apparatus using the liquid discharger according to the embodiment of the present disclosure with reference to FIGS. 7 and 8.

FIG. 7 is a schematic diagram illustrating an electrode manufacturing apparatus 500 as an example of an electrode manufacturing apparatus using the liquid discharger according to an embodiment of the present disclosure.

The electrode manufacturing apparatus 500 is an apparatus for manufacturing an electrode mixture layer on a base using the liquid composition of embodiments of the present disclosure. The electrode manufacturing apparatus 500 includes an electrode mixture layer forming device 100 that applies a liquid composition onto the base 34 to form an electrode mixture layer, and a heater 200 as needed. The electrode manufacturing apparatus 500 includes a conveyor 35 to convey the base 34. The conveyor 35 conveys the base 34 to the electrode mixture layer forming device 100 and, as needed, the heater 200 in this order at a preset speed.

The electrode mixture layer forming device 100 includes a liquid discharger 31a, as an example of a discharge device, to discharge the liquid composition 37 to form the electrode mixture layer on the base 34, a container 31b to store the liquid composition 37, and a feed tube 31c to feed the liquid composition 37 stored in the container 31 to the liquid discharger 31a.

The container 31b stores the liquid composition 37, and the electrode mixture layer forming device 100 discharges the liquid composition 37 from the liquid discharger 31a to form the electrode mixture layer on the base 34.

The storage container 31b and the feed tube 31c can be selected as desired as long as the storage container 31b and the feed tube 31c can stably store and feed the liquid composition 37.

The heater 200 includes a heating device 33a, and performs a drying step in which the heating device 33a heats the electrode mixture layer formed by the electrode mixture layer forming device 100 to dry the remaining liquid. The heater 200 may dry the remaining liquid under reduced pressure.

The heating device 33a is not particularly limited and may be appropriately selected depending on the intended purpose. Examples of the heating device 33a include, for example, an infrared (IR) heater, and a hot air heater.

FIG. 8 is a schematic diagram illustrating another electrode manufacturing apparatus using the liquid discharger according to according to an embodiment of the present disclosure. A description is given below of a method for manufacturing an electrode using the electrode manufacturing apparatus illustrated in FIG. 8.

The electrode manufacturing apparatus illustrated in FIG. 8 includes a liquid discharger as an electrode mixture layer forming device, including a liquid discharge head 306, a tank 307, and a supply tube 308, and a heater 309.

First, a base 211 having an elongated shape is prepared. Subsequently, the base 211 is wound around a cylindrical core, and is set between a feeding roller 304 and a reeling roller 305 such that a side of the base 211 on which the electrode mixture layer is formed faces upward in FIG. 8. The feeding roller 304 and the reeling roller 305 rotate counterclockwise to convey the base 211 from right to left in FIG. 8. Subsequently, the liquid discharge head 306 that is disposed above the base 211 between the feeding roller 304 and the reeling roller 305 discharges droplets of a liquid composition 12A onto the base 211 while the base 211 is conveyed.

Multiple liquid discharge heads 306 may be disposed in a direction substantially parallel to or substantially perpendicular to a conveyance direction of the base 211. Next, the base 211 onto which the droplets of the liquid composition 12A have been discharged is conveyed to the heater 309 by the feeding roller 304 and the reeling roller 305, and the remaining liquid is removed by heating and drying. By the above steps, an electrode 210 in which the electrode mixture layer 212 is disposed on the base 211 is obtained.

### EXAMPLES

Embodiments according to the present disclosure are described below. However, the present disclosure is not intended to be limited to the embodiments described herein.

### Production Example 1 - Preparation of Liquid Composition 1

A liquid composition was prepared using the materials and composition illustrated in Table 1. Specifically, 100 parts by weight of NCM1 (nickel-based cathode active material, D50 particle size: 4 µm, manufactured by Toshima Seisakusho Co., Ltd.) as an active material, 1.5 parts by weight of polydiethylaminoethylmethacrylate-butylmethacrylate copolymers (hereinafter, may be referred to as P (DEAmEMA-BMA)) as a binder, 1 part by weight of multi-walled carbon nanotubes (hereinafter, may be referred to as MWCNT, manufactured by Nanosil Co., Ltd.), 2 parts by weight of acetylene black (hereinafter, may be referred to as AB, manufactured by Denka Company Limited), 0.60 parts by weight of modified styrene-maleic copolymers (manufactured by BYK Japan KK) as a conductive additive, and NMP (manufactured by Tokyo Kasei Kogyo Co., Ltd.) having a solid concentration of 66.0% by weight as a dispersion medium were mixed and subjected to a dispersion treatment using an ultrasonic homogenizer (manufactured by Nippon Seiki Configuration of., Ltd). Thus, the liquid composition 1 was prepared. In the dispersion treatment, NMP was added in plural times, and the solid content concentration of the liquid composition 1 was adjusted to 66.0% by mass.

Measurement of Solid concentration of Liquid Composition The liquid composition in an amount of 10 g was placed in a heating and drying method moisture analyzer (MX-50, manufactured by A & D Co., Ltd.), and heated to 170°C and dried to measure the solids concentration of the liquid composition.

### Measurement of Shear Viscosities η^{A} and η^{B} of Liquid Composition

A cone plate (CP-50) was attached to a rheometer MCR302e (manufactured by Anton Paar Japan K.K.), the liquid composition in an amount of 0.8 mL was dropped, and the shear viscosity was measured at a gap of 0.098 mm and the temperature of 25°C. Specifically, the shear viscosity was measured for 1 minute at a shear rate of 0.1s⁻¹, and then the viscosity was measured while changing the shear rate from 0. 1s⁻¹ to 1000S⁻¹. This was repeated twice in succession, and the viscosity at 0.1s⁻¹ for the second time was adopted as η^{A}.

In addition, a parallel plate (PP-50) was attached to the rheometer, and liquid composition in an amount of 0.2 mL was dropped, and then shear viscosity measurement was performed at a gap of 0.02 mm and the temperature of 25°C. Specifically, the shear viscosity was measured for 1 minute at a shear rate of 100s⁻¹, and then the shear viscosity was measured while changing the shear rate from 100s⁻¹ to 100000S⁻¹. This was repeated twice in succession, and the shear viscosity at the second time of 0.1s⁻¹ was adopted as η^{B}.

### Measurement of Loss Tangent Tan δ of Liquid Composition

A cone plate (CP-50) was attached to a rheometer MCR302e (manufactured by Anton Paar Japan K.K.). Then, the liquid composition 0.8 mL was dropped, and dynamic viscoelasticity measurement was performed at a gap of 0.098 mm and 25°C. Specifically, the dynamic viscoelasticity was measured at a frequency of 2 Hz and a distortion rate of 0.1% for 1 minute. Subsequently, the dynamic viscoelasticity was measured at a similar frequency while changing the distortion rate from 0.01% to 1000%. This was repeated twice in succession, and a tangent loss of the liquid composition at a distortion rate of 100% in the second repetition was the tan δ 1, the tangent loss of the liquid composition at a distortion rate of 10% was the tan δ 2, and the tangent loss of the liquid composition at a distortion rate of 1% was the tan δ 3.

### Production Examples 2 to 55

Liquid compositions 2 to 55 were prepared in a similar manner as in Production Example 1 except that the composition of the liquid composition was changed to those described in Tables 1 to 3. The details of the materials described in Tables 1 to 3 are as follows.

### Active Material, Cathode Active Material

NCM1: lithium nickel cobalt manganese oxide (D50 = 4 µm, manufactured by Toyoshima Seisakusho Co., Ltd.)
NCM2: lithium nickel cobalt manganese oxide (D50 = 4 µm, manufactured by Toyoshima Seisakusho Co., Ltd.)
LNO/NCM1: lithium niobate coated lithium nickel cobalt manganese oxide

An alkoxide solution that contains lithium and niobium was subjected to a hydrolysis on the surface of the NCM powder particles to form a lithium niobate thin film with reference to a method of J. Mater. Chem. A. 2021, 9, 4117-4125. First, metallic lithium (manufactured by Honjo Metals Co., Ltd.) was dissolved in absolute ethanol (manufactured by Kanto Chemical Co., Inc.). Thus, ethanol solution of lithium ethoxide was prepared. Further, Niobium pentaethoxide (Nb (OC₂H₅) ₅) (manufactured by Kojundo Chemical Laboratory Co., Ltd.) was added to the mixed solution to prepare an alkoxide mixed solution containing lithium and niobium. The NCM1 powder was formed into a fluidized bed using a tumbling fluidized bed granulator and coating machine (FD-MP-01, manufactured by Powrex Corporation), and the alkoxides were sprayed to obtain precursor powder in which the surfaces of the NCM1 powder particles were coated with the alkoxides. The precursor powder was heated at 350°C in a dry air atmosphere to produce LNO/NCM1 in which a lithium niobate layer was formed on the surface of the NCM.

### Anode Active Material

Gr: synthetic graphite (D50 = 5 µm, manufactured by Sigma-Aldrich Japan K.K. )
SiO: silicon oxide (D50 = 8 µm, manufactured by Sigma-Aldrich Japan K.K.)

### Dispersion Medium

NMP: N-methyl-2-pyrrolidone (manufactured by Tokyo Chemical Industry Co., Ltd.)
Butyl butyrate (manufactured by Tokyo Chemical Industry Co., Ltd.)

### Other Components, Binder

P (DEAmEMA-BMA): poly (diethylaminoethylmethacrylate-butylmethacrylate) copolymer PBMA: polybutylmethacrylate (manufactured by Sigma-Aldrich Japan K.K.)

### SBR: styrene-butadiene rubber (manufactured by Sigma-Aldrich Japan K.K.)

P (DEAmEMA-BMA) was synthesized by a method described in Japanese Unexamined Patent Application Publication No. 2024-125167.

The copolymerization ratio of diethylaminoethyl methacrylate (DEAmEMABMA) and butyl methacrylate (BMA) was 20 mol%: 80 mol%.

### Conductive Auxiliary Agent

AB: acetylene black (manufactured by Denka Company Limited)
MWCNT: Multilayer carbon nanotube (manufactured by Nanocyl SA)
SWCNT: Monolayer carbon nanotube (manufactured by OCSiAl S.A.)

### Dispersant

Modified styrene-maleic acid copolymer (manufactured by BYK Japan KK)
Carboxymethyl cellulose (CMC): Sodium carboxymethyl cellulose (manufactured by Sigma-Aldrich Japan K.K.)
SC0708A: Marialim (registered trademark) SC-0708A (manufactured by NOF Corporation)
S13940: Solsperse ^{™} 13940 (manufactured by The Lubrizol Corporation)

### Solid Electrolyte

LPSC: Argyrodite type sulfide solid electrolytes Li₆PS₅Cl
Argyrodite type sulfide solid electrolytes Li₆PS₅Cl (LPSC) was synthesized by a method according to J. Power Sources. 2018, 396, 33-40. The details are as follows.

Li₂S (99.9%, manufactured by Mitsuwa Chemicals Co., Ltd.) in an amount of 0.5 g, P₂S₅ (99%, manufactured by Sigma-Aldrich Japan K.K.) in an amount of 0.5 g, and LiCl (99%, manufactured by manufactured by Sigma-Aldrich Japan K.K.) in an amount of 0.5 g were grinded for 40 hours using a planetary ball mill (PULVERISETTE, manufactured by Fritsch GmbH) to obtain sulfide solid electrolytes. The grinding was performed in a zirconia pot (45 mL) using 15 zirconia balls having a diameter of 10 mm at a revolution of 600 rpm (revolutions per minute).

**Table 1**

| Manu Facturing Exam ple | Liquid Compo -sition | Composition Of Liquid Composition | | | | | | | |
|---|---|---|---|---|---|---|---|---|---|
| | | Active Material | | Other Components | | | | | |
| | | | | Binder | | Conductive Assistant | | Solid Electrolyte | |
| | | Materia l | Weight Ratio (WR) | Material | WR | Material | WR | Mat erial | WR |
| 1 | 1 | NCM1 | 100 | P(DEAm EMA-BMA) | 1.5 | NWCNT /AB(1:2) | 3 | - | - |
| 2 | 2 | NCM1 | 100 | ditto | 1.5 | ditto | 3 | - | - |
| 3 | 3 | NCM1 | 100 | ditto | 1.5 | ditto | 3 | - | - |
| 4 | 4 | NCM1 | 100 | ditto | 1.5 | ditto | 3 | - | - |
| 5 | 5 | NCM1 | 100 | ditto | 1.5 | SWCNT | 3 | - | - |
| 6 | 6 | NCM1 | 100 | ditto | 1.5 | SWCNT | 3 | - | - |
| 7 | 7 | NCM1 | 100 | ditto | 1.5 | AB | 3 | - | - |
| 8 | 8 | NCM1 | 100 | ditto | 1.5 | NWCNT /AB(2:1) | 3 | - | - |
| 9 | 9 | NCM1 | 100 | ditto | 1.5 | AB | 3 | - | - |
| 10 | 10 | NCM1 | 100 | ditto | 1.5 | NWCNT /AB(2:1) | 3 | - | - |
| 11 | 11 | NCM1 | 100 | ditto | 1.5 | NWCNT /AB(1:2) | 3 | - | - |
| 12 | 12 | NCM1 | 100 | ditto | 1.5 | ditto | 3 | - | - |
| 13 | 13 | NCM1 | 100 | ditto | 1.5 | ditto | 3 | - | - |
| 14 | 14 | NCM1 | 100 | ditto | 1.5 | ditto | 3 | - | - |
| 15 | 15 | NCM1 | 100 | ditto | 1.5 | ditto | 3 | - | - |
| 16 | 16 | NCM1 | 100 | ditto | 1.5 | ditto | 3 | - | - |
| 17 | 17 | NCM2 | 100 | ditto | 1.5 | NWCNT /AB(2:1) | 1.5 | - | - |
| 18 | 18 | NCA | 100 | ditto | 1.5 | ditto | 1.5 | - | - |
| 19 | 19 | SiO | 100 | SBR | 2.0 | SWCNT/ AB(0.05: 0.45) | 0.5 | - | - |

**Table 1 - Continued**

| Manu Facturing Exam ple | Liquid Compo -sition | Composition Of Liquid Composition | | | | | |
|---|---|---|---|---|---|---|---|
| | | Other Components | | | | Dispersion Mediu m | Solid Content Consolida tion [wt%] |
| | | Dispersant 1 | | Dispersant 2 | | | |
| | | Material | WR | Material | WR | Material | |
| 1 | 1 | Modified Styrene-maleic Copolymer | 0.60 | - | - | NMP | 63.2 |
| 2 | 2 | ditto | 0.60 | - | - | NMP | 65.5 |
| 3 | 3 | ditto | 0.60 | - | - | NMP | 62.1 |
| 4 | 4 | ditto | 0.60 | - | - | NMP | 67.5 |
| 5 | 5 | ditto | 0.20 | - | - | NMP | 66.8 |
| 6 | 6 | ditto | 0.40 | - | - | NMP | 64 |
| 7 | 7 | ditto | 0.15 | - | - | NMP | 62.9 |
| 8 | 8 | ditto | 1.00 | - | - | NMP | 66 |
| 9 | 9 | ditto | 0.15 | - | - | NMP | 67 |
| 10 | 10 | ditto | 1.00 | - | - | NMP | 68 |
| 11 | 11 | ditto | 0.50 | - | - | NMP | 65.5 |
| 12 | 12 | ditto | 0.70 | - | - | NMP | 66 |
| 13 | 13 | ditto | 0.40 | - | - | NMP | 67.4 |
| 14 | 14 | ditto | 0.60 | - | - | NMP | 60.7 |
| 15 | 15 | ditto | 0.60 | - | - | NMP | 63.6 |
| 16 | 16 | ditto | 0.60 | - | - | NMP | 61.8 |
| 17 | 17 | ditto | 1.00 | - | - | NMP | 65 |
| 18 | 18 | ditto | 1.00 | - | - | NMP | 65 |
| 19 | 19 | CMC | 1.50 | - | - | Water | 40 |

**Table 2**

| Manu Facturing Exam ple | Liquid Compo -sition | Composition Of Liquid Composition | | | | | | | |
|---|---|---|---|---|---|---|---|---|---|
| | | Active Material | | Other Components | | | | | |
| | | | | Binder | | Conductive Assistant | | Solid Electrolyte | |
| | | Materia l | Weight Ratio (WR) | Material | WR | Material | WR | Materia l | WR |
| 20 | 20 | Gr | 100 | SBR | 2.9 | SWCNT/ AB (0.05:0.45 ) | 3 | - | - |
| 21 | 21 | SiO:Gr =2.8 | 100 | ditto | 2.9 | ditto | 3 | - | - |
| 22 | 22 | NCM1 | 100 | P (DEAmE MA-BMA) | 1.5 | NWCNT/ AB (1:2) | 3 | - | - |
| 23 | 23 | NCM1 | 100 | ditto | 1.5 | ditto | 3 | - | - |
| 24 | 24 | NCM1 | 100 | ditto | 1.5 | ditto | 3 | - | - |
| 25 | 25 | NCM1 | 100 | ditto | 1.5 | ditto | 3 | - | - |
| 26 | 26 | NCM1 | 100 | ditto | 1.5 | ditto | 3 | - | - |
| 27 | 27 | NCM1 | 100 | ditto | 1.5 | ditto | 3 | - | - |
| 28 | 28 | NCM1 | 100 | ditto | 1.5 | ditto | 3 | - | - |
| 29 | 29 | NCM1 | 100 | ditto | 1.5 | ditto | 3 | - | - |
| 30 | 30 | NCM1 | 100 | ditto | 1.5 | ditto | 3 | - | - |
| 31 | 31 | NCM1 | 100 | PBMA | 3 | AB | 3 | LPSCI | 32 |
| 32 | 32 | NCM1 | 100 | ditto | 3 | ditto | 3 | ditto | 32 |
| 33 | 33 | NCM1 | 100 | ditto | 3 | ditto | 3 | ditto | 32 |
| 34 | 34 | NCM1 | 100 | ditto | 3 | ditto | 3 | ditto | 32 |
| 35 | 35 | NCM1 | 100 | ditto | 3 | ditto | 3 | ditto | 32 |
| 36 | 36 | NCM1 | 100 | ditto | 3 | AB/VGCF (1:2) | 3 | ditto | 32 |
| 37 | 37 | NCM2 | 100 | ditto | 3 | ditto | 3 | ditto | 32 |

**Table 2 -Continued**

| Manu Facturing Exam ple | Liquid Compo -sition | Composition Of Liquid Composition | | | | | |
|---|---|---|---|---|---|---|---|
| | | Other Components | | | | Dispersion Medium | Solid Content Consolidat ion [wt%] |
| | | Dispersant 1 | | Dispersant 2 | | | |
| | | Material | WR | Material | WR | Material | |
| 20 | 20 | CMC | 1.50 | - | - | NMP | 63.2 |
| 21 | 21 | ditto | 1.50 | - | - | NMP | 65.5 |
| 22 | 22 | S13940 | 0.60 | SC0708A | 0.5 | | |
| 23 | 23 | ditto | 0.60 | - | - | NMP | 65.5 |
| 24 | 24 | ditto | 0.60 | - | - | NMP | 65.5 |
| 25 | 25 | ditto | 0.60 | - | - | NMP | 65.5 |
| 26 | 26 | ditto | 0.60 | - | - | NMP | 65.5 |
| 27 | 27 | ditto | 0.60 | - | - | NMP | 65.5 |
| 28 | 28 | ditto | 0.60 | - | - | NMP | 65.5 |
| 29 | 29 | ditto | 0.60 | - | | | |
| 30 | 30 | ditto | 0.60 | - | | | |
| 31 | 31 | SC0708A | 0.50 | S13940 | | | |
| 32 | 32 | ditto | 0.50 | ditto | | | |
| 33 | 33 | ditto | 0.50 | ditto | | | |
| 34 | 34 | ditto | 0.50 | ditto | | | |
| 35 | 35 | ditto | 0.50 | ditto | | | |
| 36 | 36 | ditto | 0.50 | ditto | | | |
| 37 | 37 | ditto | 0.50 | ditto | | | |

**Table 3**

| Manu Facturing Metho d | Liquid Compo -sition | Composition Of Liquid Composition | | | | | | | |
|---|---|---|---|---|---|---|---|---|---|
| | | Active Material | | Other Components | | | | | |
| | | | | Binder | | Conductive Assistant | | Solid Electrolyte | |
| | | Materia l | Weight Ratio (WR) | Materia l | WR | Material | WR | Materia l | WR |
| 38 | 38 | NCM1 | 100 | PBMA | 3 | AB/VGCF (1:2) | 3 | LPSCI | 32 |
| 39 | 39 | ditto | 100 | ditto | 3 | ditto | 3 | ditto | 32 |
| 40 | 40 | ditto | 100 | ditto | 3 | ditto | 3 | ditto | 32 |
| 41 | 41 | ditto | 100 | ditto | 3 | ditto | 3 | ditto | 32 |
| 42 | 42 | ditto | 100 | ditto | 3 | ditto | 3 | ditto | 32 |
| 43 | 43 | ditto | 100 | ditto | 3 | ditto | 3 | ditto | 32 |
| 44 | 44 | ditto | 100 | ditto | 3 | ditto | 3 | ditto | 32 |
| 45 | 45 | ditto | 100 | ditto | 3 | ditto | 3 | ditto | 32 |
| 46 | 46 | ditto | 100 | ditto | 3 | VGCF | 3 | ditto | 32 |
| 47 | 47 | ditto | 100 | ditto | 3 | ditto | 3 | ditto | 32 |
| 48 | 48 | ditto | 100 | ditto | 3 | ditto | 3 | ditto | 32 |
| 49 | 49 | ditto | 100 | ditto | 3 | ditto | 3 | ditto | 32 |
| 50 | 50 | ditto | 100 | ditto | 3 | ditto | 3 | ditto | 32 |
| 51 | 51 | ditto | 100 | ditto | 3 | AB | 3 | ditto | 32 |
| 52 | 52 | ditto | 100 | ditto | 3 | ditto | 3 | ditto | 32 |
| 53 | 53 | ditto | 100 | ditto | 3 | ditto | 3 | ditto | 32 |
| 54 | 54 | ditto | 100 | ditto | 3 | ditto | 3 | ditto | 32 |
| 55 | 55 | ditto | 100 | ditto | 3 | ditto | 3 | ditto | 32 |

**Table 3 - Continued**

| Manu - Factu- ring Metho d | Liquid Compo -sition | Composition Of Liquid Composition | | | | | |
|---|---|---|---|---|---|---|---|
| | | Other Components | | | | Dispersion Medium | Solid Content |
| | | Dispersant 1 | | Dispersant 2 | | | |
| | | Material | WR | Material | WR | Material | Consolid ation [wt%] |
| 38 | 38 | SC0708A | 0.50 | S13940 | 1.8 | Butyl butyrate | 65 |
| 39 | 39 | ditto | 0.50 | ditto | 1.8 | Butyl acetate | 65 |
| 40 | 40 | ditto | 0.50 | ditto | 1.8 | Ethyl heptanoate | 65 |
| 41 | 41 | ditto | 0.50 | ditto | 1.8 | Anisole | 55 |
| 42 | 42 | ditto | 0.50 | ditto | 1.8 | Methyl hexanoate | 65 |
| 43 | 43 | ditto | 0.50 | ditto | 1.8 | Butyl butyrate | 65 |
| 44 | 44 | ditto | 0.50 | ditto | 1.8 | Butyl acetate | 65 |
| 45 | 45 | ditto | 0.50 | ditto | 1.8 | Ethyl heptanoate | 65 |
| 46 | 46 | ditto | 0.50 | ditto | 1.8 | Anisole | 55 |
| 47 | 47 | ditto | 0.50 | ditto | 1.8 | Methyl hexanoate | 65 |
| 48 | 48 | ditto | 0.50 | ditto | 1.8 | Butyl butyrate | 65 |
| 49 | 49 | ditto | 0.50 | ditto | 1.8 | Butyl acetate | 65 |
| 50 | 50 | ditto | 0.50 | ditto | 1.8 | Ethyl heptanoate | 65 |
| 51 | 51 | S13940 | 3.00 | SC0708 A | 3.00 | Anisole | 55 |
| 52 | 52 | ditto | 3.00 | ditto | 3.00 | Methyl hexanoate | 65 |
| 53 | 53 | ditto | 3.00 | ditto | 3.00 | Butyl butyrate | 65 |
| 54 | 54 | ditto | 3.00 | ditto | 3.00 | Butyl acetate | 65 |
| 55 | 55 | ditto | 3.00 | ditto | 3.00 | Ethyl heptanoate | 65 |

Tables 4 to 6 illustrate the physical properties (viscosities η^{A} and η^{B}, loss tangents tan δ 1, tan δ 2, and tan δ 3) of the liquid compositions 1 to 55.

**Table 4.**

| Liquid Composition | Composition of Liquid Composition | | | | |
|---|---|---|---|---|---|
| | n^{A} [mPa·s] | n^{B} [mPa·s] | tan δ1 | tan δ2 | tan δ 3 |
| 1 | 1387 | 27.7 | 1.29 | 1.09 | 0.81 |
| 2 | 10041 | 32.2 | 2.23 | 2.03 | 0.76 |
| 3 | 1233 | 5.8 | 1.7 | 1.57 | 0.63 |
| 4 | 12376 | 85.9 | 3.23 | 2.9 | 0.96 |
| 5 | 14000 | 66.0 | 3.93 | 3.1 | 0.97 |
| 6 | 11000 | 18.0 | 2.42 | 1.9 | 0.78 |
| 7 | 1031 | 25.0 | 1.55 | 1.48 | 0.6 |
| 8 | 17530 | 80.2 | 1.48 | 1.24 | 0.55 |
| 9 | 19020 | 94.1 | 2.44 | 1.72 | 0.68 |
| 10 | 22158 | 98.7 | 1.72 | 1.56 | 0.57 |
| 11 | 1348.8 | 25.8 | 1.76 | 0.88 | 0.32 |
| 12 | 1553.6 | 28.3 | 3.23 | 2.18 | 1.03 |
| 13 | 21270.3 | 90.2 | 0.94 | 1.05 | 0.93 |
| 14 | 284.6 | 12.1 | 1.78 | 1.62 | 0.61 |
| 15 | 10290.0 | 122.5 | 2.19 | 1.82 | 0.77 |
| 16 | 958.2 | 10.4 | 2.04 | 1.47 | 0.66 |
| 17 | 8800 | 45.2 | 1.26 | 1.14 | 0.5 |
| 18 | 6600 | 27.9 | 1.34 | 1.28 | 0.56 |
| 19 | 4000 | 30 | 1.18 | 1.23 | 0.57 |

**Table 5.**

| Liquid Composition | Composition of Liquid Composition | | | | |
|---|---|---|---|---|---|
| | n^{A} [mPa·s] | n^{B} [mPa·s] | tan δ1 | tan δ2 | tan δ 3 |
| 20 | 6000 | 40 | 1.42 | 1.33 | 0.61 |
| 21 | 5000 | 35 | 1.32 | 1.29 | 0.62 |
| 22 | 13910 | 18.4 | 1.34 | 1.21 | 0.78 |
| 23 | 14740 | 26.4 | 1.4 | 1.3 | 0.81 |
| 24 | 10911 | 10.8 | 1.04 | 1.02 | 0.58 |
| 25 | 11541 | 11.3 | 1.09 | 1.06 | 0.67 |
| 26 | 11061 | 11 | 1.06 | 1.04 | 0.62 |
| 27 | 18610 | 37.3 | 1.62 | 1.38 | 0.93 |
| 28 | 17370 | 31.3 | 1.52 | 1.31 | 0.87 |
| 29 | 12610 | 15.3 | 1.21 | 1.09 | 0.71 |
| 30 | 12271 | 14.7 | 1.08 | 1.05 | 0.65 |
| 31 | 8195.9 | 68.1 | 1.49 | 1.32 | 0.86 |
| 32 | 903.7 | 17.0 | 1.74 | 1.59 | 0.89 |
| 33 | 7278.2 | 30.5 | 1.13 | 1.09 | 0.66 |
| 34 | 7012.5 | 25.8 | 1.08 | 1.05 | 0.65 |
| 35 | 8334.1 | 74.3 | 1.52 | 1.44 | 0.87 |
| 36 | 9470.4 | 84.0 | 2.66 | 1.91 | 0.83 |
| 37 | 9764.1 | 88.1 | 2.29 | 2.07 | 0.9 |

**Table 6.**

| Liquid Composition | Composition of Liquid Composition | | | | |
|---|---|---|---|---|---|
| | n^{A} [mPa·s] | n^{B} [mPa·s] | tan δ1 | tan δ2 | tan δ 3 |
| 38 | 9118.2 | 52.7 | 2.41 | 2.32 | 0.67 |
| 39 | 9106.5 | 46.0 | 2.14 | 1.72 | 0.56 |
| 40 | 9311.1 | 81.7 | 2.34 | 2.01 | 0.95 |
| 41 | 8904.5 | 72.3 | 2.74 | 1.92 | 0.88 |
| 42 | 9277.0 | 66.2 | 2.27 | 2.01 | 0.92 |
| 43 | 8690.2 | 45.7 | 2.44 | 2.09 | 0.69 |
| 44 | 8477.1 | 36.0 | 2.01 | 1.72 | 0.55 |
| 45 | 8813.1 | 71.8 | 2.34 | 2.04 | 0.97 |
| 46 | 7523.2 | 52.3 | 2.55 | 1.89 | 0.88 |
| 47 | 8270.0 | 41.8 | 2.69 | 2 | 0.91 |
| 48 | 7831.6 | 25.7 | 2.4 | 2.19 | 0.66 |
| 49 | 7400.1 | 21.0 | 1.99 | 1.7 | 0.5 |
| 50 | 7211.6 | 61.8 | 2 | 2.14 | 0.98 |
| 51 | 8242.1 | 72.2 | 2.7 | 1.91 | 0.85 |
| 52 | 8799.3 | 80.9 | 2.2 | 2.08 | 0.87 |
| 53 | 8321.3 | 50.5 | 2.37 | 2.13 | 0.65 |
| 54 | 8148.5 | 44.8 | 2.04 | 1.72 | 0.59 |
| 55 | 9178.4 | 83.7 | 2.65 | 2 | 0.94 |

### Liquid compositions 1 to 55, Comparative Examples 1 to 4

Using the liquid compositions 1 to 55, the liquid compositions were applied, and evaluations of the scattering and film thickness uniformity of the liquid compositions were performed under the conditions described in Tables 7 to 9.

### Application of Liquid Compositions

A valve-type nozzle was attached to an inkjet image forming apparatus (EV2500, manufactured by Ricoh Company, Ltd.) in a configuration as illustrated in FIG. 6, to fill the liquid compositions.

When the active material is a cathode active material, a copper foil (hereinafter, referred to as Cu foil) base was disposed on a stage on which the liquid composition is to be applied. When the active material is an anode active material, an aluminum foil (hereinafter, referred to as AL foil) base was disposed on the stage. The liquid composition was applied to the stage while the stage was conveyed at a speed of 60 meters per minute (mpm). Subsequently, the liquid composition was dried on a hot plate. Thus, an electrode was formed. When a positive electrode is formed, the discharge conditions of the liquid composition were set such that the film thickness of the liquid composition after drying was 100 µm, and the drying temperature was set to 120°C. When a negative electrode is formed, the discharge conditions of the liquid composition were set such that the film thickness of the liquid composition after drying was 100 µm, and the drying temperature was set to 80°C.

When the liquid composition was applied onto the base, an image was formed in a square shape with a 20 mm in the conveyance direction and a 20 mm in the vertical direction. The printing resolutions in a direction perpendicular to the conveyance direction were set to 20 dpi, in other words, at an interval of 1.25 mm. When a width in which the liquid composition is applicable calculated from a formula of (print resolution × number of discharge ports in the direction perpendicular to the conveyance direction) was smaller than 20 mm, the discharge device was slid in the direction perpendicular to the conveyance direction each time when the liquid composition is discharged. For example, when the number of discharge ports of the discharge device is eight, the width in which the liquid composition is applicable is calculated as 1.25 mm × 8 = 10 mm. Accordingly, in order to apply the liquid composition in the width of 20 mm, the liquid composition is applied twice, which is calculated from 10 mm / 20 mm, in the width direction. Similarly, when the number of the discharge ports is one, the width in which the liquid composition is applicable is calculated as 1.25 × 1 = 1.25 mm. Accordingly, the liquid composition is applied 16 times, which is calculated by dividing 20 by 1.25, in the width of 20 mm. The width in which the liquid composition is applicable is illustrated in tables 7, 8, and 9.

The distances between the base and the discharge device are illustrated in the tables 7, 8 and 9.

The liquid composition was discharged in the following three methods.

### Discharge Method: Valve Jet (VJ) - Continuous

While the liquid composition was coated by 20 mm in the conveyance direction, valves of valve-type nozzles were kept open to continuously discharge the liquid composition.

### Discharge Method: VJ - Non Continuous

While the liquid composition was coated by 20 mm in the conveyance direction, the valves of the valve-type nozzles are opened and closed by the frequency of 1 kHz to discontinuously discharge the liquid composition.

### Discharge Method: Jet Dispenser (JD) - Continuous

The liquid composition was discharged under similar conditions as in the discharge method of VJ-continuous except that a jet dispenser (manufactured by Musashi Engineering Co., Ltd.) was employed as the liquid discharger.

### Evaluation of Scattering

Whether the liquid scattering was present or absent within a square, which is larger by 10 mm from each side of a square of 20mm of the electrode mixture layer, and surrounds the 20 mm square of the electrode mixture layer of the electrode obtained by applying the liquid composition were observed using a white laser interferometer microscope VK-X3000 (manufactured by Keyence Corporation). When the liquid scattering was observed, the film thickness of the liquid composition in which the liquid scattering was observed was measured using the white laser interferometer microscope VK-X3000, and the level of the liquid scattering was evaluated according to the following criteria. A, B, C, and D are acceptable, and NG is not acceptable. When the liquid scattering that corresponds to NG was observed, the acceptable criterion was set based on the experience that a short circuit frequently occurred when a battery was produced using the electrode in which the liquid scattering was observed.

### Evaluation Criteria

A: No scattering observed
B: Liquid scattering was observed, and the maximum film thickness was less than 1 µm.
C: Liquid scattering was observed, and the maximum film thickness was equal to 1 µm or smaller than 5 µm
D: Liquid scattering was observed, and the maximum film thickness was equal to 5 µm or smaller than 10 µm
E: Liquid scattering was observed, and the maximum film thickness was equal to or greater than 10 µm

### Evaluation of Film Thickness Uniformity

The film thickness of the 20 mm square of the electrode mixture layer of the electrodes obtained by applying the liquid composition was measured using a laser microscope VK-X3000 (manufactured by Keyence Corporation) equipped with a white interferometer.

The surface roughness of the electrode mixture layer within a square with each side having a length of 17 mm, within the 20 mm square except an inner area surrounding the 17 mm from the ends of sides of the 20 mm square by 3 mm was calculated, and the film thickness uniformity was evaluated according to the following criteria. A, B, C, and D are acceptable, and NG is not acceptable. The evaluation of the film thickness uniformity was not performed except for Examples 16 to 31, the column of the film thickness uniformity for other Examples and comparative examples was left blank (-) in the tables 7, 8 and 9.

### Evaluation Criteria

A: Surface roughness was smaller than 2 µm
B: Surface roughness was equal to 2 µm or smaller than 5 µm
C: Surface roughness was equal to 5 µm or smaller than 7 µm
D: surface roughness was equal to 7 µm or smaller than 10 µm
NG: Surface roughness was equal to or greater than 10 µm

**Table 7**

| Embodiment | Liquid Composition | Base | Discharge Method | Width |
|---|---|---|---|---|
| 1 | 1 | AL foil | VJ-continuous | 20 |
| 2 | 2 | ditto | ditto | 20 |
| 3 | 2 | ditto | ditto | 20 |
| 4 | 2 | ditto | ditto | 20 |
| 5 | 3 | ditto | ditto | 20 |
| 6 | 4 | ditto | ditto | 20 |
| 7 | 5 | ditto | ditto | 20 |
| 8 | 6 | ditto | ditto | 20 |
| 9 | 7 | ditto | ditto | 20 |
| 10 | 8 | ditto | ditto | 20 |
| 11 | 9 | ditto | ditto | 20 |
| 12 | 10 | ditto | ditto | 20 |
| 13 | 11 | ditto | ditto | 20 |
| 14 | 12 | ditto | ditto | 20 |
| 15 | 13 | ditto | ditto | 20 |
| 16 | 2 | ditto | VJ-noncontinuous | 20 |
| 17 | 2 | ditto | ditto | 1.25 |
| 18 | 2 | ditto | JD-continuous | 1.25 |
| 19 | 17 | ditto | VJ-continuous | 20 |
| 20 | 18 | ditto | ditto | 20 |

**Table 7 - Continued**

| Embodiment | Distance between Discharger and Base [mm] | Scattering Level A to D: Acceptable | Film Thickness Uniformity |
|---|---|---|---|
| | | NG: Unacceptable | |
| 1 | 1.50 | C | - |
| 2 | 1.50 | A | - |
| 3 | 3.00 | B | - |
| 4 | 4.00 | C | - |
| 5 | 1.50 | D | - |
| 6 | 1.50 | A | - |
| 7 | 1.50 | A | - |
| 8 | 1.50 | B | - |
| 9 | 1.50 | C | - |
| 10 | 1.50 | A | - |
| 11 | 1.50 | A | - |
| 12 | 1.50 | D | - |
| 13 | 1.50 | B | - |
| 14 | 1.50 | B | - |
| 15 | 1.50 | C | - |
| 16 | 1.50 | B | B |
| 17 | 1.50 | B | C |
| 18 | 1.50 | B | C |
| 19 | 1.50 | A | A |
| 20 | 1.50 | A | A |

**Table 8**

| Embodiment | Liquid Composition | Base | Discharge Method | Width |
|---|---|---|---|---|
| 21 | 19 | Cu foil | VJ-continuous | 20 |
| 22 | 20 | ditto | ditto | 20 |
| 23 | 21 | ditto | ditto | 20 |
| 24 | 22 | AL foil | ditto | 20 |
| 25 | 23 | ditto | ditto | 20 |
| 26 | 24 | ditto | ditto | 20 |
| 27 | 25 | ditto | ditto | 20 |
| 28 | 26 | ditto | ditto | 20 |
| 29 | 27 | ditto | ditto | 20 |
| 30 | 28 | ditto | ditto | 20 |
| 31 | 29 | ditto | ditto | 20 |
| 32 | 30 | ditto | ditto | 20 |
| 33 | 31 | ditto | ditto | 20 |
| 34 | 33 | ditto | ditto | 20 |
| 35 | 34 | ditto | ditto | 20 |
| 36 | 35 | ditto | ditto | 20 |
| 37 | 36 | ditto | ditto | 20 |
| 38 | 37 | ditto | ditto | 20 |
| 39 | 38 | ditto | ditto | 20 |
| 40 | 39 | ditto | ditto | 20 |

**Table 8 - Continued**

| Embodiment | Distance between Discharger and Base [mm] | Scattering Level A to D: Acceptable NG: Unacceptable | Film Thickness Uniformity |
|---|---|---|---|
| 21 | 1.50 | B | D |
| 22 | 1.50 | B | D |
| 23 | 1.50 | B | D |
| 24 | 1.50 | A | B |
| 25 | 1.50 | A | A |
| 26 | 1.50 | D | A |
| 27 | 1.50 | B | A |
| 28 | 1.50 | C | A |
| 29 | 1.50 | A | A |
| 30 | 1.50 | A | A |
| 31 | 1.50 | A | A |
| 32 | 1.50 | B | A |
| 33 | 1.50 | B | - |
| 34 | 1.50 | B | - |
| 35 | 1.50 | B | - |
| 36 | 1.50 | B | - |
| 37 | 1.50 | B | - |
| 38 | 1.50 | B | - |
| 39 | 1.50 | B | - |
| 40 | 1.50 | B | - |

**Table 9**

| Embodiment | Liquid Composition | Base | Discharge Method | Width |
|---|---|---|---|---|
| 41 | 19 | Cu foil | VJ-continuous | 20 |
| 42 | 20 | ditto | ditto | 20 |
| 43 | 21 | ditto | ditto | 20 |
| 44 | 22 | AL foil | ditto | 20 |
| 45 | 23 | ditto | ditto | 20 |
| 46 | 24 | ditto | ditto | 20 |
| 47 | 25 | ditto | ditto | 20 |
| 48 | 26 | ditto | ditto | 20 |
| 49 | 27 | ditto | ditto | 20 |
| 50 | 28 | ditto | ditto | 20 |
| 51 | 29 | ditto | ditto | 20 |
| 52 | 30 | ditto | ditto | 20 |
| 53 | 31 | ditto | ditto | 20 |
| 54 | 33 | ditto | ditto | 20 |
| 55 | 34 | ditto | ditto | 20 |
| 56 | 35 | ditto | ditto | 20 |
| Comparative Example 1 | 36 | ditto | ditto | 20 |
| Comparative Example 2 | 37 | ditto | ditto | 20 |
| Comparative Example 3 | 38 | ditto | ditto | 20 |
| Comparative Example 4 | 39 | ditto | ditto | 20 |

**Table 9 - Continued**

| Embodimen t | Distance between Discharger and Base [mm] | Scattering Level A to D: Acceptable NG: Unacceptable | Film Thickness Uniformity |
|---|---|---|---|
| 21 | 1.50 | B | D |
| 22 | 1.50 | B | D |
| 23 | 1.50 | B | D |
| 24 | 1.50 | A | B |
| 25 | 1.50 | A | A |
| 26 | 1.50 | D | A |
| 27 | 1.50 | B | A |
| 28 | 1.50 | C | A |
| 29 | 1.50 | A | A |
| 30 | 1.50 | A | A |
| 31 | 1.50 | A | A |
| 32 | 1.50 | B | A |
| 33 | 1.50 | B | - |
| 34 | 1.50 | B | - |
| 35 | 1.50 | B | - |
| 36 | 1.50 | B | - |
| 37 | 1.50 | B | - |
| 38 | 1.50 | B | - |
| 39 | 1.50 | B | - |
| 40 | 1.50 | B | - |

From the results of Examples 1 to 56, it was observed that electrodes that prevents the liquid scattering were obtained by using liquid compositions having η^{A} equal to or smaller than 1000 mPa·s and η^{B} equal to or smaller than 100 mPa·s. By contrast, from the results of Comparative Examples 1, 3, and 4, when liquid compositions having η^{A} smaller than 1000 mPa·s was employed, the liquid scattering that did not satisfy the acceptable criteria was observed. In addition, from the result of Comparative Example 2, even when a liquid composition having η^{B} larger than 100 mPa·s was employed, the liquid scattering which did not satisfy the acceptance criteria was observed.

Aspects of embodiments of the present disclosure are, for example, as follows.

### First Aspect

A liquid composition includes an active material and a dispersion medium, when a viscosity of the liquid composition is η^{A} at a shear rate of 10⁻¹s⁻¹ and a viscosity of the liquid composition at a shear rate of 10⁵s⁻¹ is η^{B}, η^{A} is equal to or greater than 1000 mPa·s and η^{B} is equal to or smaller than 100 mPa·s.

### Second Aspect

In the liquid composition according to the first aspect, when a tangent loss at a distortion rate of 100% is tan δ 1, the tan δ 1 is equal to or greater than 1.0.

### Third Aspect

In the liquid composition according to the first or second aspect, the η^{A} is equal to or smaller than 20000 mPa·s.

### Fourth Aspect

In the liquid composition according to any one of the first to third aspect, the η^{B} is equal to or greater than 10 mPa·s.

### Fifth Aspect

In the liquid composition according to any one of the first to fourth aspect, when the loss tangent at a distortion rate of 10% is tan δ 2, tan δ 2 is equal to or greater than 1.0.

### Sixth Aspect

In the liquid composition according to any one of the first to fifth aspect, when the loss tangent at a distortion rate of 1% is tan δ 3, tan δ 3 is smaller than 1.0.

### Seventh Aspect

A liquid discharger includes a storage container in which the liquid composition according to any one of the first to sixth aspect, is stored, and a discharge device to discharge the liquid composition from a liquid discharge head onto a base.

### Eighth Aspect

In the liquid discharger according to the seventh aspect, the discharge device discharges the liquid composition onto the base while forming a liquid column between the liquid discharge head and the base.

### Nineth Aspect

A liquid discharge method includes discharging. The discharging discharges the liquid composition from a liquid discharge head onto a base while forming a liquid column between the liquid discharge head and the base

The above-described embodiments are illustrative and do not limit the present invention. Thus, numerous additional modifications and variations are possible in light of the above teachings. For example, elements and/or features of different illustrative embodiments may be combined with each other and/or substituted for each other within the scope of the present invention.

## Claims

1. A liquid composition (37) comprising:
an active material; and
a dispersion medium,
wherein η^{A} is equal to or greater than 1000 mPa·s; and
η^{B} is equal to or smaller than 100 mPa·s,
where η^{A} is a viscosity of the liquid composition at a shear rate of 10⁻¹s⁻¹; and
η^{B} is a viscosity of the liquid composition at a shear rate of 10⁵s⁻¹.

2. The liquid composition according to claim 1,
wherein tan δ 1 is equal to or greater than 1.0,
where tan δ 1 is a tangent loss of the liquid composition at a distortion rate of 100%.

3. The liquid composition according to claim 1 or 2,
wherein the η^{A} is equal to or smaller than 20000 mPa·s.

4. The liquid composition according to claim 1, 2 or 3,
wherein the η^{B} is equal to or greater than 10 mPa·s.

5. The liquid composition according to any one of claims 1 to 4, wherein tan δ 2 is equal to or greater than 1.0,
where the tan δ 2 is a loss tangent of the liquid composition at a distortion rate of 10%.

6. The liquid composition according to any one of claims 1 to 5, wherein tan δ 3 is smaller than 1.0,
where the tan δ 3 is a loss tangent of the liquid composition at a distortion rate of 1%.

7. A liquid discharger (300, 300') comprising:
a storage container (307, 313) to store the liquid composition according to any one of claims 1 to 6; and
a discharge device (306) including a liquid discharge head (306) to discharge the liquid composition onto a base.

8. The liquid discharger (300, 300') according to claim 7,
wherein the discharge device (306) discharges the liquid composition onto the base while forming a liquid column between the liquid discharge head (306) and the base.

9. A liquid discharge method comprising:
discharging the liquid composition according to any one of claims 1 to 6 from a liquid discharge head onto a base while forming a liquid column between the liquid discharge head (306) and the base.
